# EUROPEAN PATENT APPLICATION

(11) **EP 2 876 550 A1**
(43) Date of publication of application: **27.05.2015**
(21) Application number: 14191427.5
(22) Date of filing: 03.11.2014
(51) Int. Cl.: G06F 9/44, G06F 17/30

(54) **Methods, apparatuses and computer program products for utilizing subtyping to support evolution of data types**

(30) Priority: 21.11.2013 US 201314086408
(71) Applicant: HERE Global B.V., 5503 LB Veldhoven (NL)
(72) Inventor: Sabbouh, Marwan Badawi, Chelmsford, MA Massachusetts 01824 (US)
(74) Representative: Nokia Corporation

(57) **Abstract**

An apparatus utilizing subtyping to evolve data types includes a processor and memory storing executable computer program code causing the apparatus to at least perform operations defining a subtype relationship in an object model supporting types of instances to share data. The program code further causes the apparatus to define a constraint specifying an instance of child type is also an instance of parent type such that instances of child type are instances of parent type. The program code further causes the apparatus to define a constraint specifying the child type is a subtype of the parent type which is the parent of the child type. The program code further causes the apparatus to evaluate an instance(s) from an application(s) or device(s) to determine whether the instance(s) is valid based on detecting whether the instance(s) complies with the constraints. Corresponding methods and computer program products are also provided.

## Description

### TECHNOLOGICAL FIELD

An embodiment of the invention relates generally to cloud system management and, more particularly, relates to a method, apparatus, and computer program product for evolving data types in an object model for usage in a cloud system.

### BACKGROUND

The modern communications era has brought about a tremendous expansion of wireline and wireless networks. Computer networks, television networks, and telephony networks are experiencing an unprecedented technological expansion, fueled by consumer demand. Wireless and mobile networking technologies have addressed related consumer demands, while providing more flexibility and immediacy of information transfer.

Current and future networking technologies continue to facilitate ease of information transfer and convenience to users. Due to the now ubiquitous nature of electronic communication devices, people of all ages and education levels are utilizing electronic devices to communicate with other individuals or contacts, receive services and/or share information, media and other content. One area in which there is a demand to increase ease of information transfer relates to cloud systems which store and share data for consumers of the cloud system.

At present, when using a cloud system for the purpose of storing and sharing data, it is typically expected that the cloud system offer its consumers a common object model for serializing/deserializing data of the consumers, a common serialization format, a common exchange document, a data modeling language for applications to model the data, Universal Resource Identifier (URI) conventions that describe the addressing of the data in the cloud system, and Rest application programming interfaces (APIs) for storing/modifying the data. The object model may identify instances by type.

Currently, when using a cloud system for the purpose of storing and sharing data, applications may define their data type in a data model, and may then store instances of this type (also referred to herein as instances or instances of data) in the cloud. The cloud may use the data model to validate the instances. Therefore, instance data may subscribe to a particular definition of the type in the data model. The existence of the type definition may enable applications to consume the data created by other applications, effectively promoting the sharing of data via the cloud. Oftentimes, new requirements may emerge that make it necessary to evolve the data type in the data model. This evolution of the data type, if not done very carefully, may cause legacy applications to stop working or it may impact the quality of the data being shared via the cloud.

At present, an existing property definition associated with the type in the data model is typically not changed or deleted. In addition, it is also typically agreed upon that a type may need to evolve to support new requirements. This evolution of the type, in the form of new properties, may pose serious problems, particularly to legacy applications written in support of the original type.

To illustrate the problem, suppose that an application evolve its original data type O to add a new property P to type O. In this regard, the new type O may be denoted to be the type O with the addition of property P. As such, the original type O may be denoted to be the type O without the addition of property P. Subsequently, the application may proceed to create instance I conformant to the new type O, for example, containing the property P and its corresponding value.

The problem may arise when a legacy application that was written in compliance of the original type O, consumes the new instance from the cloud, which may make changes to the instance, and then may store the instance in the cloud. Since the application code conforms to the original type O, the application code may be unaware of the existence of property P. As such, the legacy application may either stop executing when it encounters the property P which it does not recognize, or may drop the property P and its corresponding value from the instance I. The former condition may cause the legacy application to crash, while the latter condition may cause the inadvertent loss of information when an instance created by an application conforming to new type O is consumed by the legacy application conforming to the original type O and then the instance is shared again in the cloud.

In view of the foregoing drawbacks, there may be a need to provide an efficient and reliable mechanism for evolving data types of an object model for usage in cloud systems.

### BRIEF SUMMARY

A method, apparatus and computer program product are therefore provided for evolving a data type of an object model for usage in a cloud system. In this regard, an example embodiment may add one or more properties to an existing data model(s) without violating the data model definitions of a legacy application which may be configured to interact with the cloud system.

An example embodiment may define a subtype relationship in the object model. Subsequently, one or more constraints defined for this subtype relationship may be enforced during validation by a network device of a cloud system. In order to evolve a data type(s) to meet new requirements, an example embodiment may create another data type that is a subtype (e.g., a child type) of the type (e.g., a parent type) desired to be evolved. The object model may enforce the subtype relationship by specifying constraints.

In one example embodiment, a method for utilizing subtyping to evolve data types of an object model is provided. The method may include defining a subtype relationship in an object model configured to support multiple types of instances of data to facilitate sharing of data. The method may further include defining a first constraint of the subtype relationship in the object model specifying that an instance of a child type is also an instance of a parent type such that any instances of the child type are instances of the parent type. The method may further include defining a second constraint of the subtype relationship in the object model specifying that the child type is a subtype of the parent type and the parent type is the parent of the child type. The method may further include evaluating at least one received instance of data from at least one application or at least one communication device to determine whether the received instance of data is valid based in part on detecting whether the received instance of data complies with the first constraint and the second constraint of the defined subtype relationship.

In another example embodiment, an apparatus for utilizing subtyping to evolve data types of an object model is provided. The apparatus may include a processor and memory including computer program code. The memory and the computer program code are configured to, with the processor, cause the apparatus to at least perform operations including defining a subtype relationship in an object model configured to support multiple types of instances of data to facilitate sharing of data. The memory and computer program code are further configured to, with the processor, cause the apparatus to define a first constraint of the subtype relationship in the object model specifying that an instance of a child type is also an instance of a parent type such that any instances of the child type are instances of the parent type. The memory and computer program code are further configured to, with the processor, cause the apparatus to define a second constraint of the subtype relationship in the object model specifying that the child type is a subtype of the parent type and the parent type is the parent of the child type. The memory and computer program code are further configured to, with the processor, cause the apparatus to evaluate at least one received instance of data from at least one application or at least one communication device to determine whether the received instance of data is valid based in part on detecting whether the received instance of data complies with the first constraint and the second constraint of the defined subtype relationship.

In yet another example embodiment, a computer program product for utilizing subtyping to evolve data types of an object model is provided. The computer program product includes at least one computer-readable storage medium having computer-executable program code instructions stored thereon. The computer-executable program code instructions may include program code instructions configured to define a subtype relationship in an object model configured to support multiple types of instances of data to facilitate sharing of data. The program code instructions may also be configured to define a first constraint of the subtype relationship in the object model specifying that an instance of a child type is also an instance of a parent type such that any instances of the child type are instances of the parent type. The program code instructions may also be configured to define a second constraint of the subtype relationship in the object model specifying that the child type is a subtype of the parent type and the parent type is the parent of the child type. The program code instructions may also be configured to evaluate at least one received instance of data from at least one application or at least one communication device to determine whether the received instance of data is valid based in part on detecting whether the received instance of data complies with the first constraint and the second constraint of the defined subtype relationship.

### BRIEF DESCRIPTION OF THE SEVERAL VIEWS OF THE DRAWINGS

Having thus described some embodiments of the invention in general terms, reference will now be made to the accompanying drawings, which are not necessarily drawn to scale, and wherein:
FIG. 1 is a schematic block diagram of a system according to an example embodiment of the invention;
FIG. 2 is a schematic block diagram of an apparatus according to an example embodiment of the invention;
FIG. 3 is a diagram of a network device according to an example embodiment of the invention;
FIG. 4 is a diagram of a person definition according to an example embodiment of the invention;
FIG. 5 is a diagram of an instance of type person according to an example embodiment of the invention;
FIG. 6 is a diagram of an adult definition according to an example embodiment of the invention;
FIG. 7 is a diagram of a payload of a post operation according to an example embodiment of the invention;
FIG. 8 is a diagram of an instance of type person and adult according to an example embodiment of the invention; and
FIG. 9 illustrates a flowchart for utilizing subtyping to evolve data types of an object model according to an example embodiment of the invention.

### DETAILED DESCRIPTION

Some embodiments of the present invention will now be described more fully hereinafter with reference to the accompanying drawings, in which some, but not all embodiments of the invention are shown. Indeed, various embodiments of the invention may be embodied in many different forms and should not be construed as limited to the embodiments set forth herein. Like reference numerals refer to like elements throughout. As used herein, the terms "data," "content," "information" and similar terms may be used interchangeably to refer to data capable of being transmitted, received and/or stored in accordance with embodiments of the present invention. Moreover, the term "exemplary", as used herein, is not provided to convey any qualitative assessment, but instead merely to convey an illustration of an example. Thus, use of any such terms should not be taken to limit the spirit and scope of embodiments of the invention.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network device, other network device, and/or other computing device.

As defined herein a "computer-readable storage medium," which refers to a non-transitory, physical or tangible storage medium (e.g., volatile or non-volatile memory device), may be differentiated from a "computer-readable transmission medium," which refers to an electromagnetic signal.

Additionally, as referred to herein, a legacy application may denote an existing application that may be designed or built based on a legacy data model (e.g., a prior version of a data model). Also, as referred to herein, an instance(s) may refer to an instance(s) of data or an item(s) of an instance(s) of data.

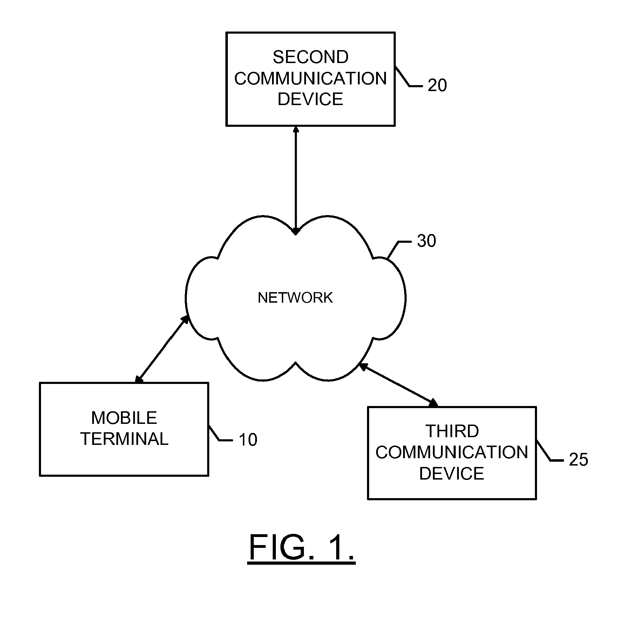

FIG. 1 illustrates a generic system diagram in which a device such as a mobile terminal 10 is shown in an exemplary communication environment. As shown in FIG. 1, an embodiment of a system in accordance with an example embodiment of the invention may include a first communication device (e.g., mobile terminal 10) and a second communication device 20 capable of communication with each other via a network 30. In one embodiment of the invention may further include one or more additional communication devices, one of which is depicted in FIG. 1 as a third communication device 25. In one embodiment, not all systems that employ an embodiment of the invention may comprise all the devices illustrated and/or described herein. While an embodiment of the mobile terminal 10 and/or second and third communication devices 20 and 25 may be illustrated and hereinafter described for purposes of example, other types of terminals, such as portable digital assistants (PDAs), pagers, mobile televisions, mobile telephones, gaming devices, laptop computers, cameras, video recorders, audio/video players, radios, global positioning system (GPS) devices, Bluetooth headsets, Universal Serial Bus (USB) devices or any combination of the aforementioned, and other types of voice and text communications systems, can readily employ an embodiment of the invention. Furthermore, devices that are not mobile, such as servers and personal computers may also readily employ an embodiment of the invention.

The network 30 may include a collection of various different nodes (of which the second and third communication devices 20 and 25 may be examples), devices or functions that may be in communication with each other via corresponding wired and/or wireless interfaces. As such, the illustration of FIG. 1 should be understood to be an example of a broad view of certain elements of the system and not an all-inclusive or detailed view of the system or the network 30. Although not necessary, in one embodiment, the network 30 may be capable of supporting communication in accordance with any one or more of a number of First-Generation (1G), Second-Generation (2G), 2.5G, Third-Generation (3G), 3.5G, 3.9G, Fourth-Generation (4G) mobile communication protocols, Long Term Evolution (LTE), and/or the like. In one embodiment, the network 30 may be a point-to-point (P2P) network.

One or more communication terminals such as the mobile terminal 10 and the second and third communication devices 20 and 25 may be in communication with each other via the network 30 and each may include an antenna or antennas for transmitting signals to and for receiving signals from a base site, which could be, for example a base station that is a part of one or more cellular or mobile networks or an access point that may be coupled to a data network, such as a Local Area Network (LAN), a Metropolitan Area Network (MAN), and/or a Wide Area Network (WAN), such as the Internet. In turn, other devices such as processing elements (e.g., personal computers, server computers or the like) may be coupled to the mobile terminal 10 and the second and third communication devices 20 and 25 via the network 30. By directly or indirectly connecting the mobile terminal 10 and the second and third communication devices 20 and 25 (and/or other devices) to the network 30, the mobile terminal 10 and the second and third communication devices 20 and 25 may be enabled to communicate with the other devices or each other, for example, according to numerous communication protocols including Hypertext Transfer Protocol (HTTP) and/or the like, to thereby carry out various communication or other functions of the mobile terminal 10 and the second and third communication devices 20 and 25, respectively.

Furthermore, although not shown in FIG. 1, the mobile terminal 10 and the second and third communication devices 20 and 25 may communicate in accordance with, for example, radio frequency (RF), near field communication (NFC), Bluetooth (BT), Infrared (IR) or any of a number of different wireline or wireless communication techniques, including Local Area Network (LAN), Wireless LAN (WLAN), Worldwide Interoperability for Microwave Access (WiMAX), Wireless Fidelity (WiFi), Ultra-Wide Band (UWB), Wibree techniques and/or the like. As such, the mobile terminal 10 and the second and third communication devices 20 and 25 may be enabled to communicate with the network 30 and each other by any of numerous different access mechanisms. For example, mobile access mechanisms such as Wideband Code Division Multiple Access (W-CDMA), CDMA2000, Global System for Mobile communications (GSM), General Packet Radio Service (GPRS) and/or the like may be supported as well as wireless access mechanisms such as WLAN, WiMAX, and/or the like and fixed access mechanisms such as Digital Subscriber Line (DSL), cable modems, Ethernet and/or the like.

In an example embodiment, the first communication device (e.g., the mobile terminal 10) may be a mobile communication device such as, for example, a wireless telephone or other devices such as a personal digital assistant (PDA), mobile computing device, camera, video recorder, audio/video player, positioning device, game device, television device, radio device, or various other like devices or combinations thereof. The second communication device 20 and the third communication device 25 may be mobile or fixed communication devices. However, in one example, the second communication device 20 and the third communication device 25 may be servers, remote computers or terminals such as, for example, personal computers (PCs) or laptop computers.

In an example embodiment, the network 30 may be an ad hoc or distributed network arranged to be a smart space. Thus, devices may enter and/or leave the network 30 and the devices of the network 30 may be capable of adjusting operations based on the entrance and/or exit of other devices to account for the addition or subtraction of respective devices or nodes and their corresponding capabilities.

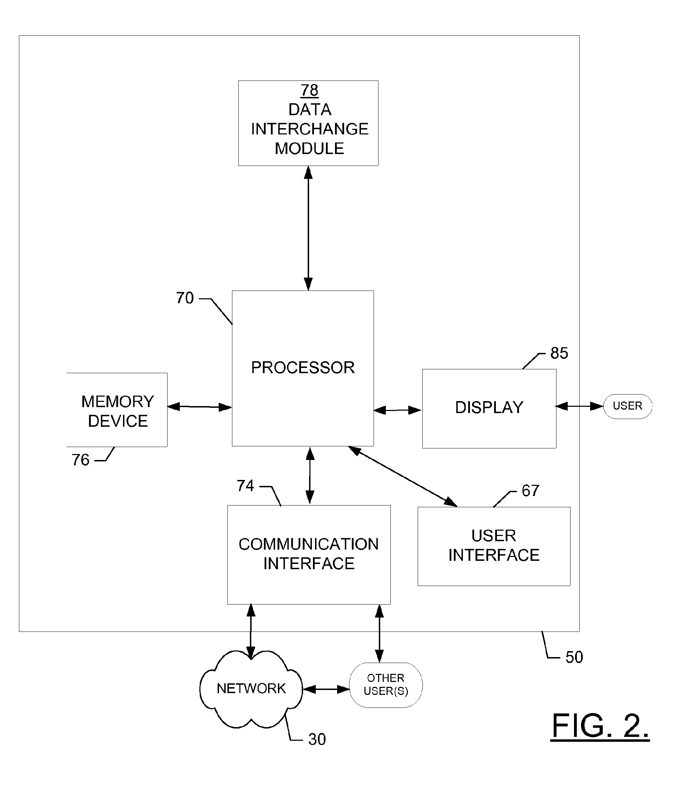

In an example embodiment, the mobile terminal as well as the second and third communication devices 20 and 25 may employ an apparatus (e.g., apparatus of FIG. 2) capable of employing an embodiment of the invention.

FIG. 2 illustrates a schematic block diagram of an apparatus according to an example embodiment of the invention. An example embodiment of the invention will now be described with reference to FIG. 2, in which certain elements of an apparatus 50 are displayed. The apparatus 50 of FIG. 2 may be employed, for example, on the mobile terminal 10 (and/or the second communication device 20 or the third communication device 25). Alternatively, the apparatus 50 may be embodied on a network device of the network 30. However, the apparatus 50 may alternatively be embodied at a variety of other devices, both mobile and fixed (such as, for example, any of the devices listed above). In some cases, an embodiment may be employed on a combination of devices. Accordingly, an embodiment of the invention may be embodied wholly at a single device (e.g., the mobile terminal 10), by a plurality of devices in a distributed fashion (e.g., on one or a plurality of devices in a P2P network) or by devices in a client/server relationship. Furthermore, it should be noted that the devices or elements described below may not be mandatory and thus some may be omitted in a certain embodiment.

Referring now to FIG. 2, the apparatus 50 may include or otherwise be in communication with a processor 70, a user interface 67, a communication interface 74, a memory device 76, a display 85, and a data interchange module 78. The memory device 76 may include, for example, volatile and/or non-volatile memory. For example, the memory device 76 may be an electronic storage device (e.g., a computer readable storage medium) comprising gates configured to store data (e.g., bits) that may be retrievable by a machine (e.g., a computing device like processor 70). In an example embodiment, the memory device 76 may be a tangible memory device that is not transitory. The memory device 76 may be configured to store information, data, files, applications, instructions or the like for enabling the apparatus to carry out various functions in accordance with an example embodiment of the invention. For example, the memory device 76 could be configured to buffer input data for processing by the processor 70. Additionally or alternatively, the memory device 76 may store one or more applications including one or more computer instructions, software code, software instructions or the like for execution by the processor 70. The memory device 76 may also store data received (e.g., one or more instances of data (e.g., a document(s)) of an object model) from one or more network devices (e.g., of a cloud system).

The apparatus 50 may, in one embodiment, be a mobile terminal (e.g., mobile terminal 10) or a fixed communication device or computing device configured to employ an example embodiment of the invention. However, in one embodiment, the apparatus 50 may be embodied as a chip or chip set. In other words, the apparatus 50 may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus 50 may therefore, in some cases, be configured to implement an embodiment of the invention on a single chip or as a single "system on a chip." As such, in some cases, a chip or chipset may constitute means for performing one or more operations for providing the functionalities described herein.

Additionally or alternatively, the chip or chipset may constitute means for enabling user interface navigation with respect to the functionalities and/or services described herein.

The processor 70 may be embodied in a number of different ways. For example, the processor 70 may be embodied as one or more of various processing means such as a coprocessor, microprocessor, a controller, a digital signal processor (DSP), processing circuitry with or without an accompanying DSP, or various other processing devices including integrated circuits such as, for example, an ASIC (application specific integrated circuit), an FPGA (field programmable gate array), a microcontroller unit (MCU), a hardware accelerator, a special-purpose computer chip, or the like. In an example embodiment, the processor 70 may be configured to execute instructions stored in the memory device 76 or otherwise accessible to the processor 70. As such, whether configured by hardware or software methods, or by a combination thereof, the processor 70 may represent an entity (e.g., physically embodied in circuitry) capable of performing operations according to an embodiment of the invention while configured accordingly. Thus, for example, when the processor 70 is embodied as an ASIC, FPGA or the like, the processor 70 may be specifically configured hardware for conducting the operations described herein. Alternatively, as another example, when the processor 70 is embodied as an executor of software instructions, the instructions may specifically configure the processor 70 to perform the algorithms and operations described herein when the instructions are executed. However, in some cases, the processor 70 may be a processor of a specific device (e.g., a mobile terminal or network device) adapted for employing an embodiment of the invention by further configuration of the processor 70 by instructions for performing the algorithms and operations described herein. The processor 70 may include, among other things, a clock, an arithmetic logic unit (ALU) and logic gates configured to support operation of the processor 70.

In an example embodiment, the processor 70 may be configured to operate a connectivity program, such as a browser, Web browser or the like. In this regard, the connectivity program may enable the apparatus 50 to transmit and receive Web content, such as for example location-based content or any other suitable content, according to a Wireless Application Protocol (WAP), for example.

Meanwhile, the communication interface 74 may be any means such as a device or circuitry embodied in either hardware, a computer program product, or a combination of hardware and software that is configured to receive and/or transmit data from/to a network and/or any other device or module in communication with the apparatus 50. In this regard, the communication interface 74 may include, for example, an antenna (or multiple antennas) and supporting hardware and/or software for enabling communications with a wireless communication network (e.g., network 30). In fixed environments, the communication interface 74 may alternatively or also support wired communication. As such, the communication interface 74 may include a communication modem and/or other hardware/software for supporting communication via cable, digital subscriber line (DSL), universal serial bus (USB), Ethernet or other mechanisms.

The user interface 67 may be in communication with the processor 70 to receive an indication of a user input at the user interface 67 and/or to provide an audible, visual, mechanical or other output to the user. As such, the user interface 67 may include, for example, a keyboard, a mouse, a joystick, a display, a touch screen, a microphone, a speaker, or other input/output mechanisms. In an example embodiment in which the apparatus is embodied as a server or some other network devices, the user interface 67 may be limited, remotely located, or eliminated. The processor 70 may comprise user interface circuitry configured to control at least some functions of one or more elements of the user interface, such as, for example, a speaker, ringer, microphone, display, and/or the like. The processor 70 and/or user interface circuitry comprising the processor 70 may be configured to control one or more functions of one or more elements of the user interface through computer program instructions (e.g., software and/or firmware) stored on a memory accessible to the processor 70 (e.g., memory device 76, and/or the like).

In an example embodiment, the processor 70 may be embodied as, include or otherwise control the data interchange module. The data interchange module 78 may be any means such as a device or circuitry operating in accordance with software or otherwise embodied in hardware or a combination of hardware and software (e.g., processor 70 operating under software control, the processor 70 embodied as an ASIC or FPGA specifically configured to perform the operations described herein, or a combination thereof) thereby configuring the device or circuitry to perform the corresponding functions of the data interchange module 78, as described herein. Thus, in an example in which software is employed, a device or circuitry (e.g., the processor 70 in one example) executing the software forms the structure associated with such means.

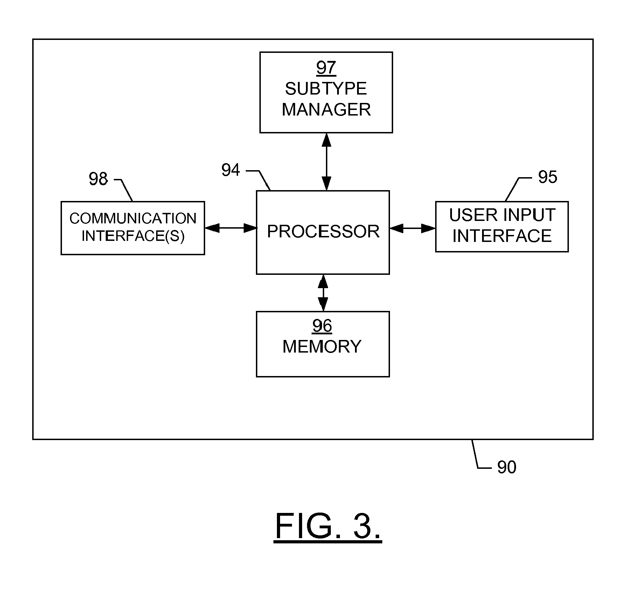

The data interchange module 78 may facilitate exchange of data (e.g., instances of data, instances of data of a document(s), etc.) between a network device (e.g., network device 90 of FIG. 3) of a cloud system (also referred to herein as cloud) and other communication devices (e.g., other apparatuses 50) of the cloud system, as described more fully below.

Referring now to FIG. 3, a block diagram of an example embodiment of a network device is provided. In an example embodiment, the network device 90 (e.g., a server (e.g., communication device 20)) may be a network device of a cloud system. As shown in FIG. 3, the network device generally includes a processor 94 and an associated memory 96. The memory 96 may include volatile and/or non-volatile memory, and may store content, data and/or the like. For example, the memory 96 may store content, data, information (e.g., one or more documents, instances of data of an object model(s), etc.), and/or the like transmitted from, and/or received by, the network device. Also for example, the memory 96 may store client applications, instructions, and/or the like for the processor 94 to perform the various operations of the network device in accordance with an embodiment of the invention, as described herein.

The memory 96 may be an electronic storage device (for example, a computer readable storage medium) comprising gates configured to store data (for example, bits) that may be retrievable by a machine (for example, like processor 94). In some example embodiments, the memory 96 may be configured to store information, data, content, files, applications, instructions (e.g., computer instructions) or the like for enabling the network device 90 to carry out various functions in accordance with example embodiments of the invention. For instance, the memory 96 may store content, data, information, and/or the like transmitted from, and/or received by, the network device 90.

In addition to the memory 96, the processor 94 may also be connected to at least one interface or other means for displaying, transmitting and/or receiving data, content, and/or the like. In this regard, the interface(s) may comprise at least one communication interface 98 or other means for transmitting and/or receiving data, content, and/or the like, as well as at least one user input interface 95. The user input interface 95, in turn, may comprise any of a number of devices allowing the network device to receive data from a user, such as a keypad, a touch display, a joystick or other input device. In this regard, the processor 94 may comprise user interface circuitry configured to control at least some functions of one or more elements of the user input interface. The processor and/or user interface circuitry of the processor may be configured to control one or more functions of one or more elements of the user interface through computer program instructions (e.g., software and/or firmware) stored on a memory accessible to the processor (e.g., volatile memory, non-volatile memory, and/or the like).

The processor 94 may be embodied in a number of different ways. For example, the processor 94 may be embodied as one or more of various processing means such as a coprocessor, microprocessor, a controller, a digital signal processor (DSP), processing circuitry with or without an accompanying DSP, or various other processing devices including integrated circuits such as, for example, an ASIC (application specific integrated circuit), an FPGA (field programmable gate array), a microcontroller unit (MCU), a hardware accelerator, a special-purpose computer chip, or the like. In an example embodiment, the processor 94 may be configured to execute instructions stored in the memory 96 or otherwise accessible to the processor 94. As such, whether configured by hardware or software methods, or by a combination thereof, the processor 94 may represent an entity (e.g., physically embodied in circuitry) capable of performing operations according to an embodiment of the invention while configured accordingly. Thus, for example, when the processor 94 is embodied as an ASIC, FPGA or the like, the processor 94 may be specifically configured hardware for conducting the operations described herein. Alternatively, as another example, when the processor 94 is embodied as an executor of software instructions, the instructions may specifically configure the processor 94 to perform the algorithms and operations described herein when the instructions are executed. However, in some cases, the processor 94 may be a processor of a specific device (e.g., a network device or a mobile terminal) adapted for employing an embodiment of the invention by further configuration of the processor 94 by instructions for performing the algorithms and operations described herein. The processor 94 may include, among other things, a clock, an arithmetic logic unit (ALU) and logic gates configured to support operation of the processor 94.

In an example embodiment, the processor 94 may be embodied as, include or otherwise control the subtype manager 97. The subtype manager 97 may be any means such as a device or circuitry operating in accordance with software or otherwise embodied in hardware or a combination of hardware and software (e.g., processor 94 operating under software control, the processor 94 embodied as an ASIC or FPGA specifically configured to perform the operations described herein, or a combination thereof) thereby configuring the device or circuitry to perform the corresponding functions of the subtype manager 97, as described below. Thus, in an example in which software is employed, a device or circuitry (e.g., the processor 94 in one example) executing the software forms the structure associated with such means.

The subtype manager 97 may define a subtype relationship in an object model. Subsequently, one or more constraints defined by the subtype manager 97 for the defined subtype relationship may be enforced during validation by the subtype manager 97 of the network device 90 of a cloud system. To evolve a type to meet new requirements, the subtype manager 97 may create another type that is a subtype of the type desired to be evolved. In this regard, the subtype manager 97 may enable the object model to enforce a subtype relationship(s) by specifying/defining the one or more constraints. The subtype manager 97 may specify/define a constraint (i) in which U is a subtype of T, then for any instance I of U, I is also an instance of T; and a constraint (ii) in which U is a subtype of T, then T is the parent Type of U, where U is referred to as the child type (also referred to herein as child data type), and T is referred to as the parent type (also referred to herein as parent data type).

Thereafter, the subtype manager 97 may enforce one or more of the above constraints in an instance in which the subtype manager 97 processes Post, Put, Get, and/or Delete operations in the manner described below.

In response to (a) receiving a Post or Put operation (e.g., a request to store an instance of data), for example from the data interchange module 78 of apparatus 50, on an instance of type U (e.g., a child data type), the subtype manager 97 may enforce that the instance is also of type T (e.g., a parent data type).

In response to (b) receiving a Get operation (e.g., a request to obtain an instance of data), for example from the data interchange module 78 of apparatus 50, on an instance of child type U, the subtype manager 97 may not only return the instance of type U, but also return (e.g., return to the data interchange module 78) the instance of the parent type T.

Additionally, in response to (c) receiving a Delete operation, for example from the data interchange module 78 of apparatus 50, on an instance of parent type T, the subtype manager 97 may also executes the delete operation on an instance of type U, in an instance in which an instance of type U exists.

Additionally, the subtype manager 97 may define that (d) an instance of the parent type does not have to be an instance of the child type. In other words, for example, an Instance J of parent type T does not have to be an instance of child type U.

In response to (e) receiving, for example from the data interchange module 78 of apparatus 50, a Get operation on an instance of the parent type, the subtype manager 97 may only return (e.g., return to the data interchange module 78) the instance of the parent type.

Furthermore, in response to (f) receiving a Delete operation, for example from the data interchange module 78 of apparatus 50, on an instance of the child type, the subtype manager 97 may only execute the Delete operation on the instance of the child type.

While the example embodiments are applicable to all object models that support multi-typing (e.g., instances assigned a type and name) of instances, for purposes of illustration and not of limitation, an example embodiment may be described below with examples that utilize the Data Interchange Protocol (DIP). For more information regarding the Data Interchange Protocol see U.S. Patent Application No. 13/924,183, entitled: *Methods, Apparatuses and Computer Program Products for Facilitating a Data Interchange Protocol,* the contents of which is hereby incorporated by reference in its entirety.

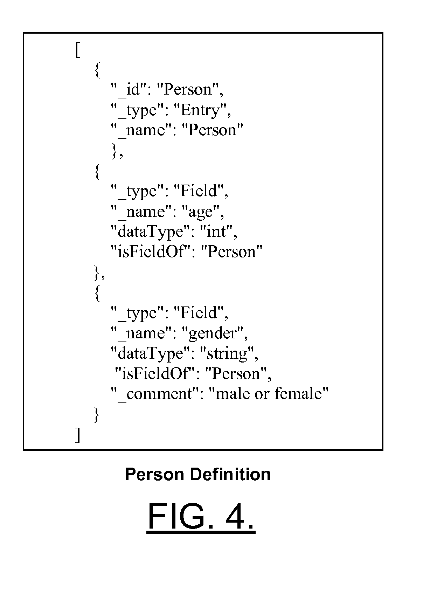

For purposes of illustration and not of limitation, consider an instance in which a legacy application (e.g., an existing application) defines a type Person in its data model according to the Person definition shown in FIG. 4. FIG. 4 shows that the type Person has two properties age and gender. The value of age is a number, while the value of gender is a string.

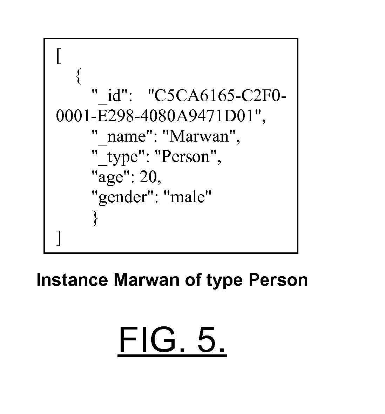

Consider further that the legacy application, on an apparatus (e.g., apparatus 50), creates an instance of data such as, for example, an instance C5CA6165-C2F0-0001-E298-4080A9471D01/Marwan of Person (also referred to herein as Marwan or instance Marwan), as shown in FIG. 5. The data interchange module (e.g., data interchange module 78) of the apparatus may provide the instance (e.g., CSCA6165-C2F0-0001-E298-4080A9471D01/Marwan of Person) to a network device (e.g., network device 90) of a cloud system. In this regard, any application(s) that subscribes to type Person may be able to manipulate one or more instances of type Person stored in a memory (e.g., memory 96) of a network device (e.g., network device 90) in a cloud system.

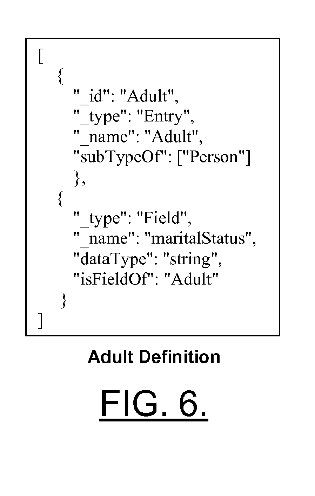

Suppose, for example, that a first social application (e.g., Twitter™, Facebook™, LinkedIn™, etc.) desires or needs to evolve type Person to include another property such as, for example, property maritalStatus. In this regard, the first social application may define type Adult to be a subtype of Person. As such, the first social application may define the Adult definition to include the property maritalStatus. In this manner, FIG. 6 shows that Adult is a subtype of Person, and that it has property maritalStatus.

In an instance in which a second social application requires or desires the new property maritalStatus, this second social application is able to share information with the legacy application. In this regard, the second social application may multi-type the instance created by the legacy application.

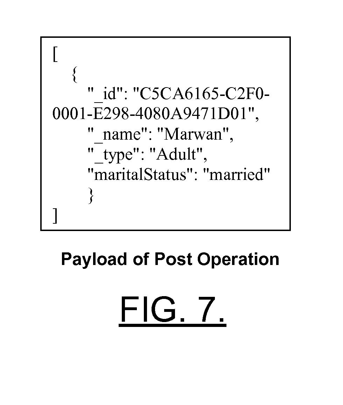

For example, suppose the second social application determines that Marwan is married. In this regard, the second social application may insert an instance Marwan of type Adult alongside instance Marwan of type Person in document C5CA6165-C2F0-0001-E298-4080A9471D01 by issuing, via a processor (e.g., processor 70) or a data interchange module (e.g., data interchange module 78), a Post operation such as, for example, Post /C5CA6165-C2F0-0001-E298-4080A9471D01/Marwan: Adult to a network device (e.g., network device 90). The payload of the Post operation is shown in FIG. 7.

Upon receipt of the Post operation, the subtype manager 97 of the network device may perform as follows. Based in part on analyzing the Post operation, the subtype manager 97 may deduce the type of the instance, such as, for example, type Adult. By analyzing the data model definition of Adult, the subtype manager 97 may determine that type Adult is a subtype of Person.

In addition, based in part on analyzing the Post operation, the subtype manager 97 may deduce the identifier (id) of the instance, such as, for example, C5CA6165-C2F0-0001-E298-4080A9471D01/Marwan.

In one example embodiment, the subtype manager 97 may determine that the instance does not meet a defined subtype constraint(s). For instance, the subtype manager 97 may utilize the identifier (id) of the instance, to attempt to retrieve (e.g., retrieve from memory 96) the instance of the parent type, such as, for example, Instance C5CA6165-C2F0-0001-E298-4080A9471D01/Marwan of type Person.

In an instance in which the subtype manager 97 fails to retrieve the instance of the parent type such as, for example, C5CA6165-C2F0-0001-E298-4080A9471D01/Marwan of type Person, the subtype manager 97 may return an indication of an error to the second social application and may abort the Post operation. Since type Adult is a subtype of type Person, type Person should also be retrievable to satisfy the defined subtype constraint(s). In other words, the subtype manager 97 may return an error to the second social application because the instance was identified as of type Adult, but not as of type Person, and as such fails constraint (i) of the defined subtype relationship.

As such, in an example embodiment, the subtype manager 97 may fail to retrieve the instance of the parent type in an instance in which the subtype manager has not previously received any instance of the parent type (e.g., C5CA6165-C2F0-0001-E298-4080A9471D01/Marwan of type Person). For instance, is this example embodiment, the second social application issued the Post operation with an instance of C5CA6165-C2F0-0001-E298-4080A9471D01/Marwan: Adult.

On the other hand, in an alternative example embodiment, in an instance in which the second social application issues the Post operation (e.g., a request to store an instance of data), to the network device 90, with an instance of C5CA6165-C2F0-0001-E298-4080A9471D01/Marwan of type Person, the subtype manager 97 may store (e.g., store in memory 96) the payload of the Post operation in the network device 90 of a cloud system in response to retrieving the instance of the parent type, such as, for example, C5CA6165-C2F0-0001-E298-4080A9471D01/Marwan of type Person.

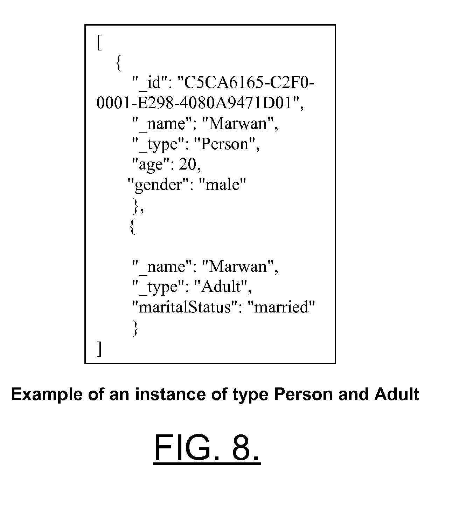

Referring now to FIG. 8, a diagram illustrating the instance C5CA6165-C2F0-0001-E298-4080A9471D01/Marwan oftype Person and of type Adult upon the successful completion of the Post operation is provided according to an example embodiment.

In some example embodiments, an application (e.g., a social application) may create a new instance of the child type. In this regard, consider the example described above in which the instance of type Person was not included in the payload of the Post operation. Additionally, consider an instance in which the instance of type Person is also not found in a network device (e.g., network device 90) of the cloud system. In this regard, the application (e.g., social application) may need to create the instance to be of type Person and of type Adult in order to be accepted and retrieved via a network device (e.g., network device 90) in the cloud system. For example, the application (e.g., social application) may submit a Post with C5CA6165-C2F0-0001-E298-4080A9471D01/Marwan of type Adult with its payload as the instance shown in FIG. 8 to a subtype manager (e.g., subtype manager 97) of a network device (e.g., network device 90) of the cloud system. In this regard, the subtype manager 97 may perform as follows.

Based in part on analyzing the Post operation, the subtype manager 97 may deduce the type of the instance, such as, for example, Adult. Additionally, based in part on analyzing the data model definition of Adult, the subtype manager 97 may determine that type Adult is a subtype of Person. In this regard, since the subtype manager 97 may determine that the instance satisfies the defined subtype constraints, the subtype manager 97 may store (e.g., store in memory 96) the payload of FIG. 7 in a network device (e.g., network device 90) of the cloud system.

In this instance, the subtype manager 97 may not need to lookup or retrieve the instance of the parent type in a network device (e.g., network device 90) of cloud system since it is submitted in the payload.

Having stored, via the subtype manager 97, an instance of type Adult and of type Person in the cloud system, an example in which a legacy application is able to retrieve the instance and manipulate the instance, and then store the instance back in the cloud system is described below. As another example, consider an instance in which a legacy application retrieves and modifies an instance created by an application (e.g., a social application). Being aware of the existence of the instance C5CA6165-C2F0-0001-E298-4080A9471D01/Marwan, the legacy application may interact with the instance as follows.

Since the legacy application may only be aware of the parent type, based in part on the parent type being defined in the data model of the legacy application, the legacy application may perform a Get operation (e.g., a request to get or obtain an instance of data), via a data interchange module (e.g., data interchange module 78) of an apparatus (e.g., apparatus 50) on the instance by the parent type such as, for example, Get C5CA6165-C2F0-0001-E298-4080A9471D01/Marwan of type Person. In this regard, the Get operation may be provided via the data interchange module to a network device (e.g., network device 90) of a cloud system. The legacy application may not know anything about the existence of a subtype such as, for example, type Adult, as the legacy application may have been written prior to the introduction/creation of the Adult type.

In response to receipt of the Get operation from the data interchange module (e.g., data interchange module 78), the subtype manager 97 may return the instance Marwan (e.g., C5CA6165-C2F0-0001-E298-4080A9471D01/Marwan of Person) shown in FIG. 5 to the legacy application of an apparatus (e.g., apparatus 50). In response to receipt of the instance Marwan, the legacy application may manipulate, via the data interchange module, the instance by changing Marwan's age from 20 to 21, and the data interchange module may then provide the modified instance to the subtype manager (e.g., subtype manager 97) of a network device (e.g., network device 90) of the cloud system.

The subtype manager may determine that the modified instance is an instance of type Person and since there are no constraints on the parent type Person, the subtype manager (e.g., subtype manager 97) may store (e.g., store in memory 96) the modified instance in a network device (e.g., network device 90) of the cloud system.

Consider, for example, an instance in which a legacy application may desire to delete an instance(s). In this regard, for example, suppose the legacy application desires to delete instance C5CA6165-C2F0-0001-E298-4080A9471D01/Marwan of type Person. As such, the legacy application may generate and send, via the data interchange module 78, a Delete operation to the subtype manager 97 to delete the instance C5CA6165-C2F0-0001-E298-4080A9471D01/Marwan of type Person. In response to receipt of the Delete operation, the subtype manager 97 may perform as follows.

Based in part on analyzing the received Delete operation, the subtype manager 97 may deduce the type of the instance being deleted such as, for example, Person. In addition, based in part on analyzing the data model type definition and the definition of constraint (ii) of the subtype relationship, the subtype manager 97 may determine that type Person is a parent type of subtype Adult. In this regard, the subtype manager 97 may delete (e.g., delete from memory 96) the instance Marwan of type Adult and of type Person.

In an alternative example embodiment, in an instance in which the subtype manager 97 were to only delete the instance Marwan of type Person but not the instance of Marwan of type adult, this would have broken constraint (i) (e.g., if child type U is a subtype of parent type T, then any instance I of child type U is also an instance of parent type T) defined for the subtype relationship.

As described above, based in part on analyzing the data model type definition and the definition of constraint (ii) of the subtype relationship, the subtype manager 97 may determine that type Person is a parent type of subtype Adult. However, it may be useful if the subtype manager 97 may perform this determination without considering or without having constraint (ii) being defined. This is because constraint (ii) may change the definition of the original parent type, albeit in a manner that may not impact a legacy application. Usage of constraint (ii) may be alleviated in a manner described more fully below.

An example embodiment may facilitate grouping together of an instance of a parent type and of a child type. In this regard, some object models (e.g., object models supporting multi-typing of instances) may store the same multi-typed logical instance as different physical objects in the cloud system. For these systems, applying constraint (i) and constraint (ii) is acceptable. However, for object models that may store the same multi-typed logical instance as a single physical object, constraint (ii) of the subtype relationship may be eliminated, disregarded or not applied. In other words, in an instance in which the instance of a child type and a parent type are co-located as the value of the same key in the cloud system, then constraint (ii) may no longer be needed.

For example, consider instance Marwan of type Person and of type Adult which may be stored in a network device (e.g., network device 90) of the cloud system as the same value of key C5CA6165-C2F0-0001-E298-4080A9471D01, as shown in FIG. 8. In this regard, the subtype manager 97 may process a delete operation, received from a data interchange module 78, for instance C5CA6165-C2F0-0001-E298-4080A9471D01/Marwan of type Person in the following manner.

In response to receiving the delete operation, the subtype manager 97 may deduce the key in the network device 90 of the cloud system of the instance Marwan of type Person (e.g., the parent type) being deleted. As such, the subtype manager 97 may remove the instance Marwan of the type Person (e.g., the parent type) being deleted from the value of the key.

In an instance in which the instance being deleted is also a type of the child type, the subtype manager 97 may attempt to apply Post or Put operation processing on the instance of the child type. However, this attempt may fail. Upon the failure of the Post or Put operation processing, the subtype manager 97 may proceed to delete the instance of the child type that caused the failure, as described more fully below.

For instance, as described above, the subtype manager 97 may take the value of the key which is an instance Marwan of the type Person and may delete this instance Marwan which may remove the instance Marwan of type Person from the value of the key.

In this regard, the instance Marwan of type Adult (e.g., a child type of the parent type) may be remaining in the value of the key. In other words, the instance Marwan of the type Adult may not be removed or deleted from the value of the key yet. As such, the subtype manager 97 may detect that it removed instance Marwan of type Person per the request of the received delete operation and may then attempt to keep or store the instance of Marwan type Adult (e.g., a child type) back into the network device 90 of cloud system.

In response to attempting to put the instance Marwan of type Adult back into the network device of the cloud system again, the subtype manager 97 may trigger an exception/failure in response to detection that this is an instance of type Adult, which is a subtype of the instance Marwan type Person (e.g., a parent type) that the subtype manager 97 previously deleted. As such, the subtype manager 97 does not have or detect the instance Marwan of type Person anymore, and as such the subtype manager 97 may also delete the instance of Marwan type Adult that the subtype manager 97 was attempting to store back in the cloud system.

In other words, the subtype manager 97 may remove the instance Marwan type Person from the value of the key. The subtype manager 97 may then attempt to keep the remaining value and store it back in the network device 90 of the cloud system. The subtype manager 97 may not accept the remaining value of the key because there is an instance Marwan of type Adult without there also being an instance of Marwan of type Person. As such, the subtype manager 97 may deletes the offending instance which is instance Marwan of type Adult in this example.

As such, by deleting the instance of Marwan type Person, the subtype manager 97 may detect a fail and may also delete the instance of Marwan type Adult (e.g., the instance of the child type) such that there is nothing left remaining as the value of the key.

In some example embodiments, the subtype manager 97 may facilitate naming of a child class/type in an alternative manner. In some instances, it may be undesirable to change the name of the type when adding new properties. To accommodate this scenario, the subtype manager 97 may adopt the convention of appending a version number to a parent type to name a child type.

For example, instead of naming the child type Adult, the subtype manager 97 may name the child type Person.2. In this example, the version number 2 is appended, by the subtype manager 97, to the parent type to create the child type.

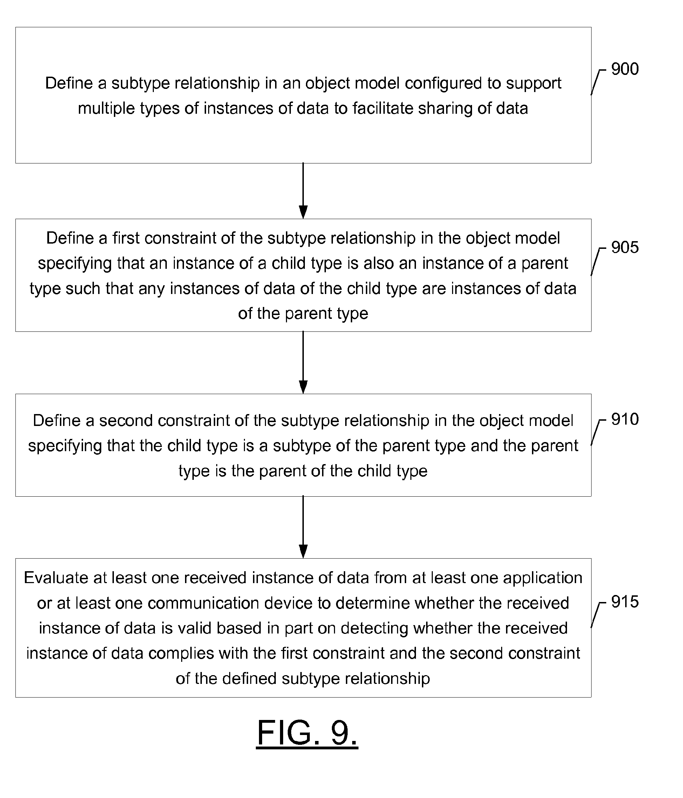

Referring now to FIG. 9, an example embodiment of a flowchart for utilizing subtyping to evolve data types of an object model is provided. At operation 900, an apparatus (e.g., network device 90) may include means, such as the subtype manager 97, the processor 94 and/or the like, for defining a subtype relationship in an object model configured to support multiple types of instances of data to facilitate sharing of data. At operation 905, the apparatus (e.g., network device 90) may include means, such as the subtype manager 97, the processor 94 and/or the like, for defining a first constraint (e.g., constraint (i)) of the subtype relationship in the object model specifying that an instance of a child type is also an instance of a parent type such that any instances of data of the child type are instances of data of the parent type.

At operation 910, the apparatus (e.g., network device 90) may include means, such as the subtype manager 97, the processor 94 and/or the like, for defining a second constraint (e.g., constraint (ii)) of the subtype relationship in the object model specifying that the child type is a subtype of the parent type and the parent type is the parent of the child type. At operation 915, the apparatus (e.g., network device 90) may include means, such as the subtype manager 97, the processor 94 and/or the like, for evaluating at least one received instance of data from at least one application (e.g., a legacy application, a social application, etc.) or at least one communication device (e.g., apparatus 50) to determine whether the received instance of data is valid based in part on detecting whether the received instance of data complies with the first constraint and the second constraint of the defined subtype relationship.

It should be pointed out that FIG. 9 is a flowchart of a system, method and computer program product according to an example embodiment of the invention. It will be understood that each block of the flowchart, and combinations of blocks in the flowchart, can be implemented by various means, such as hardware, firmware, and/or a computer program product including one or more computer program instructions. For example, one or more of the procedures described above may be embodied by computer program instructions. In this regard, in an example embodiment, the computer program instructions which embody the procedures described above are stored by a memory device (e.g., memory 96) and executed by a processor (e.g., processor 94, subtype manager 97). As will be appreciated, any such computer program instructions may be loaded onto a computer or other programmable apparatus (e.g., hardware) to produce a machine, such that the instructions which execute on the computer or other programmable apparatus cause the functions specified in the flowchart blocks to be implemented. In one embodiment, the computer program instructions are stored in a computer-readable memory that can direct a computer or other programmable apparatus to function in a particular manner, such that the instructions stored in the computer-readable memory produce an article of manufacture including instructions which implement the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus implement the functions specified in the flowchart blocks.

Accordingly, blocks of the flowchart support combinations of means for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

In an example embodiment, an apparatus for performing the method of FIG. 9 above may comprise a processor (e.g., the processor 94, subtype manager 97) configured to perform some or each of the operations (900 - 915) described above. The processor may, for example, be configured to perform the operations (900 - 915) by performing hardware implemented logical functions, executing stored instructions, or executing algorithms for performing each of the operations. Alternatively, the apparatus may comprise means for performing each of the operations described above. In this regard, according to an example embodiment, examples of means for performing operations (900 - 915) may comprise, for example, the processor 94 (e.g., as means for performing any of the operations described above), the subtype manager 97 and/or a device or circuit for executing instructions or executing an algorithm for processing information as described above.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A method comprising:
defining a subtype relationship in an object model configured to support multiple types of instances of data to facilitate sharing of data;
defining a first constraint of the subtype relationship in the object model specifying that an instance of a child type is also an instance of a parent type such that any instances of the child type are instances of the parent type;
defining a second constraint of the subtype relationship in the object model specifying that the child type is a subtype of the parent type and the parent type is the parent of the child type; and
evaluating, via a processor, at least one received instance of data from at least one application or at least one communication device to determine whether the received instance of data is valid based in part on detecting whether the received instance of data complies with the first constraint and the second constraint of the defined subtype relationship.

2. The method of claim 1, further comprising:
receiving a request to store an item of an instance of data of the child type; and
enforcing that the item of the instance of data is also of the parent type.

3. The method of claim 1, further comprising:
enabling provision of an instance of data of the child type and a corresponding instance of data of the parent type to the application or to the communication device in response to receiving a request to obtain the instance of data of the child type based in part on analyzing the first constraint and the second constraint of the defined subtype relationship.

4. The method of claim 1, further comprising:
deleting an item of an instance of the child type and a corresponding item of an instance of data of the parent type in response to receiving a request to delete the item of the instance of data of the parent type based in part on analyzing the first constraint and the second constraint of the defined subtype relationship.

5. The method of claim 1, further comprising:
enabling provision of an item of an instance of data of the parent type to the application or the communication device in response to receiving a request to obtain the item of the instance of data of the parent type and determining that the item of the instance of data of the parent type does not have to be an instance of the child type.

6. The method of claim 1, further comprising:
deleting an item of an instance of data of the child type without deleting a corresponding item of an instance of data of the parent type in response to receiving a request to delete the item of the instance of data of the child type and determining that the item of the instance of data of the parent type does not have to be an instance of the child type.

7. The method of claim 1, further comprising:
enabling provision of an indication of an error to the application or the communication device in response to determining that an item of an instance of data received from the application or the communication device corresponds to the child type and that there is no corresponding item of an instance of data of the parent type in object model based in part on detecting a violation of the first constraint of the defined subtype relationship.

8. The method of claim 1, further comprising:
enabling storage of an item of an instance of data of the child type received from the application or the communication device in a request to store the item of the instance of data in response to detecting that the request comprises a corresponding item of an instance of data of the parent type or that the corresponding item of the instance of data of the parent type is stored in a network device.

9. The method of claim 1, further comprising:
eliminating or disregarding the second constraint in response to detecting that an item of an instance of data of the child type and a corresponding item of an instance of data of the parent type are co-located as a value of a same key stored in a network device.

10. An apparatus configured to:
define a subtype relationship in an object model configured to support multiple types of instances of data to facilitate sharing of data;
define a first constraint of the subtype relationship in the object model specifying that an instance of a child type is also an instance of a parent type such that any instances of the child type are instances of the parent type;
define a second constraint of the subtype relationship in the object model specifying that the child type is a subtype of the parent type and the parent type is the parent of the child type; and
evaluate at least one received instance of data from at least one application or at least one communication device to determine whether the received instance of data is valid based in part on detecting whether the received instance of data complies with the first constraint and the second constraint of the defined subtype relationship.

11. The apparatus of claim 10, wherein the apparatus is further configured to:
receive a request to store an item of an instance of data of the child type; and
enforce that the item of the instance of data is also of the parent type.

12. The apparatus of claim 10, wherein the apparatus is further configured to:
enable provision of an instance of data of the child type and a corresponding instance of data of the parent type to the application or to the communication device in response to receiving a request to obtain the instance of data of the child type based in part on analyzing the first constraint and the second constraint of the defined subtype relationship.

13. The apparatus of claim 10, wherein the apparatus is further configured to:
delete an item of an instance of the child type and a corresponding item of an instance of data of the parent type in response to receiving a request to delete the item of the instance of data of the parent type based in part on analyzing the first constraint and the second constraint of the defined subtype relationship.

14. The apparatus of claim 10, wherein the apparatus is further configured to:
enable provision of an item of an instance of data of the parent type to the application or the communication device in response to receiving a request to obtain the item of the instance of the parent type and determining that the item of the instance of data of the parent type does not have to be an instance of the child type.

15. A computer program product comprising at least one computer-readable storage medium having computer-executable program code instructions stored therein, the computer-executable program when executed by a computer causes the performance of the actions of method of any of claims 1 to 9.
